# EUROPEAN PATENT APPLICATION

(11) **EP 3 639 983 A1**
(43) Date of publication of application: **22.04.2020**
(21) Application number: 18201371.4
(22) Date of filing: 18.10.2018
(51) Int. Cl.: B25J 9/16, B25J 9/08

(54) **ANTI-COLLISION SAFETY MEASURES FOR A RECONFIGURABLE MODULAR ROBOT**

(71) Applicant: Technische Universität München, 80333 München (DE)
(72) Inventor: Liu, Stefan, 80797 Munich (DE); Althoff, Matthias, 80805 Munich (DE)
(74) Representative: Koplin, Moritz

(57) **Abstract**

Provided is an anti-collision safety device/method for a reconfigurable modular robot which automatically derives a new/updated geometric model for the kinematic chain when the robot has been reconfigured.

## Description

### FIELD

The present disclosure relates to measures for avoiding a collision between a reconfigurable modular robot, its surroundings, and itself.

### BACKGROUND

US 2017/0348856 A1 teaches a collision avoidance procedure involving a geometric model. When the geometric model is determined to interfere with a no-entry area, a repulsive force for repelling an interfering portion of the geometric model from an interfering portion of the no-entry area is virtually generated, a posture in a state where the interfering portion of the model is pushed from the no-entry area into the operating area by the repulsive force is calculated, and the calculated posture is used as a way-point.

### SUMMARY

The present invention provides an anti-collision safety device/method for a reconfigurable modular robot which automatically derives a new/updated geometric model for the kinematic chain when the robot has been reconfigured.

The anti-collision safety device is configured to receive an indication that the robot has been reconfigured, to assign modules of the robot to elements of the kinematic chain, and to determine geometric models for the elements of the kinematic chain based on data describing the geometry of the assigned modules. The device may then calculate a collision-free movement of elements of the kinematic chain based on the determined geometric models, a model of the environment, and a target position and/or orientation of at least one element of the kinematic chain.

In this regard, the term "joint module", as used throughout the description and the claims, particularly refers to a chain of two or more rigid bodies, that are connected to each other via actuatable joints, which allow controlling relative positions between the rigid bodies, thus having one or more degrees of freedom. Moreover, the term "link module", as used throughout the description and the claims, particularly refers to a single rigid body. The joint/link modules both comprise a proximal end and a distal end, wherein at least the proximal end is attachable to other modules. Hence, the terms "modular robot", or "robot", as used throughout the description and the claims, particularly refer to an assembly of joint modules and optionally one or more link modules connected via their proximal/distal ends, such that they overall form a kinematic chain of rigid bodies connected by actuatable joints to provide constrained (or desired) motion.

Furthermore, the term "geometric model", as used throughout the description and the claims, particularly refers to a set of geometric primitives arranged relative to each other within a common coordinate frame. In addition, the formulation "collision-free movement of elements of the kinematic chain", as used throughout the description and the claims, particularly refers to avoiding unwanted (hazardous) collisions, as opposed to desired object manipulations performed by the robot. Moreover, the term "element of a kinematic chain", as used throughout the description and the claims, particularly refers to a rigid body of the kinematic chain of rigid bodies representing the robot.

By (automatically) deriving a new/updated geometric model for the kinematic chain when the robot has been reconfigured, a collision risk can be reduced, and the robot safety can be increased.

The safety device may be further configured to determine the geometric models based on approximating the geometry of the modules when being provided with said data.

I.e., the safety device may (automatically) reduce the complexity of the geometric models to decrease the computational load.

The safety device may be further configured to identify a module that has been added to the modular robot and to access a database that stores data describing the geometry of said module.

For example, a joint module and/or a link module may be provided with a memory element that stores a manufacturer and part identification (ID) which enables the safety device to search and retrieve data describing the geometry of said module. For example, a manufacturer may provide a database accessible via the internet and may regularly update the database if new joint modules/link modules become available. In another example, the data may be stored within the memory element, thereby allowing the safety device to (automatically) retrieve the data from the joint module or the link module. Notably, storing the data within the joint module or the link module reduces the risk of data tampering and hence further increases the overall safety.

The safety device may be further configured to identify a module that has been added to the modular robot by receiving a control signal via a wired or wireless connection from said module.

For example, an added module may integrate itself into a communication network and transmit the control signal to the device via the network. For instance, the safety device may act as a master device that polls data from the network elements, or the element may broadcast the signal via the network (e.g., as part of an initialization or startup routine).

The safety device may be configured to identify the module that has been added to the modular robot by receiving the control signal via a bus interface from said module.

For instance, the modules of the modular robot may form a daisy chain or a logical ring network and a control frame (i.e., a control message with a header identifying the control data in the body) from the safety device may be circulated (from module to module) along the chain with each element adding identification data to the control frame such that the safety device learns the structure of the robot by evaluating the control frame. In another example, modules may identify themselves and their neighbors.

The safety device may be further configured to identify a module that has been added to the modular robot by evaluating a signal from a sensor of the safety device.

For example, the safety device may be provided with an RFID sensor that scans the vicinity for RFID tags attached to the modules. Hence, whenever a new RFID tag is detected, the safety device may assume that a new module (as identified by the RFID tag) has been added to the modular robot. To further increase safety, the (growing) kinematic chain may be depicted to a user and the user may take corrective action, if necessary.

The safety device may be configured to identify the module that has been added to the modular robot by analyzing an image of at least a part of the module.

For instance, the modules may be provided with a bar code, a matrix code, letters, numbers (or other graphical codes) that convey information which allows identifying the modules. In another example, the safety device may identify the module based on matching its shape to one of a plurality of possible shapes.

The safety device may be further configured to identify a module that has been added to the modular robot by receiving a manual user input.

For example, the user may be provided with a user terminal (connected to the safety device) that allows assembling/reconfiguring a virtual modular robot, wherein a layout of the virtual modular robot is to reflect (changes to) the structure of the physical robot. Notably, the safety device may be part of or integrated into a control system/apparatus which controls the operation (and particularly the motion) of the robot.

The method comprises reconfiguring the robot by adding and/or removing link modules and/or joint modules to/from the robot, determining a geometric model for the robot based on data describing the geometry of the modules mounted to a frame after said reconfiguration, and using the geometric model, when the robot is operated, for collision avoidance.

In this regard, the term "frame", as used throughout the description and the claims, particularly refers to a part of the robot that remains static throughout operation and which may contain the control logic that controls the actuation of the joints. As for a mobile robot, the term "frame", as used throughout the description and the claims, particularly refers to a part of the robot to which the elements of the kinematic chain are attached, thereby forming one or more limbs of the robot which extend from the frame.

Determining the geometric model for the robot may comprise identifying a layout of the robot and accessing a database for retrieving said data.

As described above, a link module or a joint module may be provided with a memory element that holds a manufacturer and part identification (ID) which allows the safety device to search and retrieve data describing the geometry of said element. For example, a manufacturer may provide a database accessible via the internet and may regularly update the database if new link modules/joint modules become available. In another example, the data may be stored within the memory element, allowing the safety device to (automatically) retrieve the data from the link module or the joint module.

Determining the geometric model for the robot may comprise approximating a single virtual body that covers two or more neighboring modules of the robot.

For example, neighboring modules that cannot or will not be moved relative to each other may be modeled (approximated) by a single virtual body. In another example, neighboring modules that may be moved relative to each other may be modeled (approximated) by a single virtual body that covers all movements that may occur.

Identifying the layout may comprise identifying a position of a link module or a joint module within a kinematic chain.

The link modules and/or the joint modules may form a daisy chain or logical ring network and identifying the position of the link module or the joint module within the kinematic chain may comprise identifying a position of the link module or the joint module within the network.

As described above, a control frame from the safety device may be circulated (from module to module) along the modular robot with each module adding identification data to the control frame such that the safety device learns the structure of the robot by evaluating the control frame. In another example, elements may identify themselves and their neighbors.

In yet another example, identifying the position of the link module or the joint module within kinematic chain may comprise taking images of the modules of the robot.

As described above, the modules may be provided with a bar code, a matrix code, letters and/or numbers that convey information which allows identifying the modules. In another example, the safety device may identify the module based on matching its shape to one of a plurality of possible shapes.

Using the geometric model, when the robot is operated, for collision avoidance may comprise calculating a collision free path for moving one or more modules based on the geometric model, wherein the geometric model comprises a chain of approximated virtual rigid bodies that can be displaced relative to each other.

It will be appreciated that the features and attendant advantages of the disclosed method may be realized by the disclosed device and vice versa. Moreover, it is noted that throughout the description, features in brackets are to be regarded as optional.

### BRIEF DESCRIPTION OF THE DRAWINGS

The foregoing aspects and many of the attendant advantages will become more readily appreciated as the same becomes better understood by reference to the following detailed description, when taken in conjunction with the accompanying drawings, wherein like reference numerals refer to like parts throughout the various views, unless otherwise specified.
Fig. 1 illustrates a procedure for updating a geometric model for the kinematic chain when the reconfigurable modular robot has been reconfigured;
Fig. 2 illustrates an exemplary procedure for identifying modules of the modular robot;
Fig. 3 illustrates another exemplary procedure for identifying modules of the modular robot;
Fig. 4 illustrates yet another exemplary procedure for identifying modules of the modular robot; and
Fig. 5 shows a flow-chart of a procedure for avoiding a collision between the reconfigurable modular robot and obstacles in the environment of the robot and itself.

Notably, the drawings are not drawn to scale and unless otherwise indicated, they are merely intended to conceptually illustrate the structures and procedures described herein.

### DETAILED DESCRIPTION

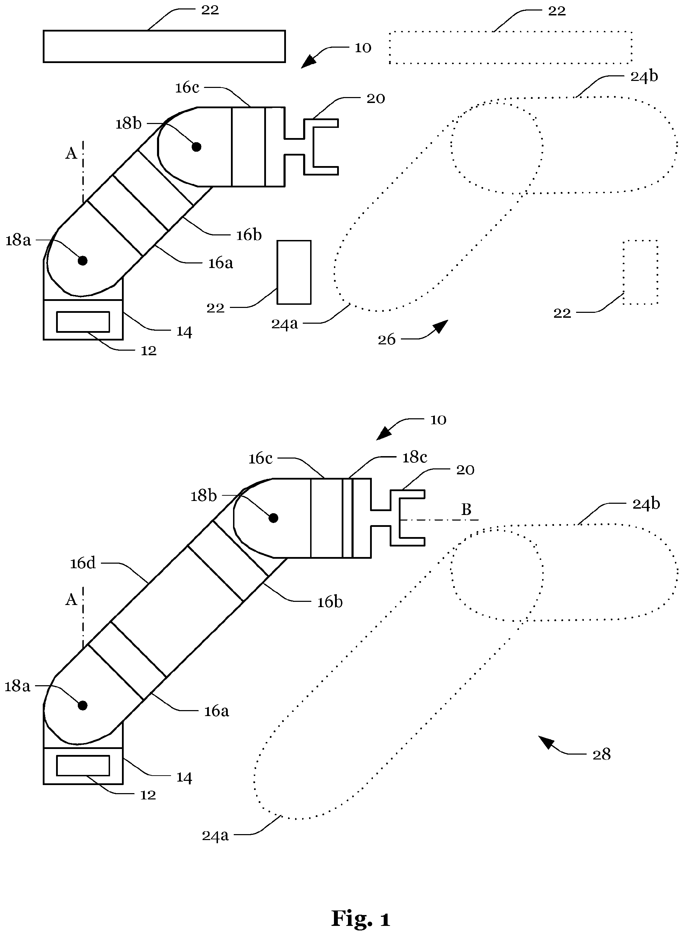

Fig. 1 illustrates a reconfiguration of a modular robot 10 which is provided with an anti-collision safety device 12. The robot 10 comprises a frame 14 standing on solid ground. The robot 10 further comprises a first link module 16a which is attached to the frame 14 by a first joint module 18a. The first joint module 18a allows for swiveling the first link module 16a around a first horizontal axis (not shown) and a vertical axis A. The robot 10 further comprises a second link module 16b which is (removably) attached to a distal end of the first link module 16a (as depicted in the upper part of Fig. 1 that shows the modular robot 10 before the reconfiguration).

The distal end of the second link module 16b is connected to a second joint module 18b (hinge joint) which allows for swiveling a third link module 16c attached to the second link module 16b by the second joint module 18b around a second horizontal axis (not shown). The third link module 16c is connected to a tool 20 (e.g., a claw or another manipulator).

When the tool 20 is to be moved to a target position, the anti-collision safety device 12 ensures that none of the elements 16a-16c, 18a, 18b, 20 of the kinematic chain collides with obstacles 22 in the surrounding. To reduce the computational complexity of this task, the anti-collision safety device 12 may overapproximate the geometry of the elements 16a-16c, 18a, 18b, 20 of the kinematic chain (as illustrated in the right part of Fig. 1). For example, the anti-collision safety device 12 may model the first and second link module 16a, 16b, and (parts of) the joint modules 18a, 18b as part of a first single virtual rigid body (geometric model) 24a and the third link module 16c, (a part of) the joint module 18b and the tool 20 as part of a second single virtual rigid body (geometric model) 24b.

The anti-collision safety device 12 may only allow a movement of the elements 16a-16c, 18a, 18b, 20 of the kinematic chain, if a corresponding movement of the first and second virtual rigid bodies 24a, 24b does not cause a collision with an obstacle 22. For example, movements (or a sequence of movements) of the elements 16a-16c, 18a, 18b, 20 may be validated based on simulating corresponding movements of the virtual rigid bodies 24a, 24b of the (simplified) geometric model 26 within (or as part of) a model of the environment. For example, the anti-collision safety device 12 may be provided with a mono- or stereo-camera system, a laser-scanner, a lidar, an ultrasonic distance device, etc. that recognizes/tracks (static and/or dynamic) obstacles (including humans) 22 in the range of the robot 10.

When the anti-collision safety device 12 receives an indication that the robot 10 has been reconfigured, it may check whether the geometric model 26 must be updated. For example, as illustrated in the lower part of Fig. 1, a fourth link module 16d may be added between the first link module 16a and the second link module 16b, and a third joint module 18c which allows for rotating the tool 20 around a third horizontal axis B (i.e., coaxially to the third link module 16c) may be added between the third link module 16c the tool 20.

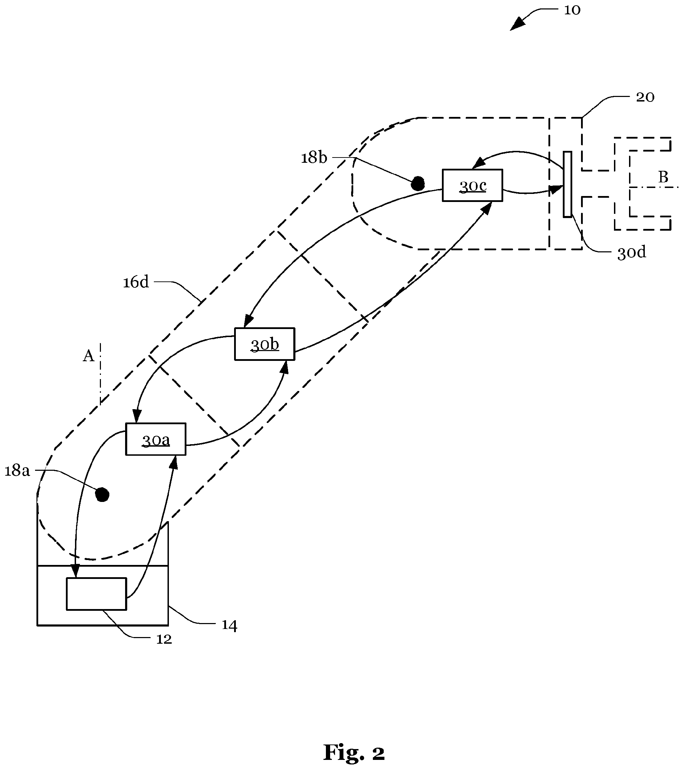

By assigning the link modules 16a-16d and the joint modules 18a-18c of the robot 10 to elements of the kinematic chain on which the geometric model 26 is based, the anti-collision safety device 12 may assess the structural change and determine a new/updated geometric model 28 for the elements of the kinematic chain. Notably, the indication that the robot 10 has been reconfigured may be caused by a self-check of the robot 10 or may be manually input, as will be explained in more detailed with reference to Fig. 2-Fig. 4.

For example, as illustrated in Fig. 2 which shows a simplified version of the robot 10 shown in Fig. 1, the link modules 16a-16d, the joint modules 18a-18c, and/or the tool 20 may be provided with electronic circuits 30a-30d that are enabled to identify the element to which they are mounted. To assess the structure of the robot 10, the anti-collision safety device 12 may hence send a control frame on a round trip along the kinematic chain.

That is, the anti-collision safety device 12 may transmit an empty control frame to the electronic circuit 30a mounted to the first joint module 18a. Upon receiving the control frame, the electronic circuit 30a may add its ID and/or geometric data describing the shape of the first joint module 18a to the control frame and transmit the (modified) control frame to the electronic circuit 30b in the neighboring link module 16d, that acts likewise. When the control frame has been passed through the electronic circuits 30a-30c, it is received by the electronic circuit 30d of the tool 20 (which is the last one of the electronic circuits 30a-30d in the chain).

As the electronic circuit 30d has no neighboring element at its distal end, it may append its ID and/or geometric data describing the shape of the tool 20 and transmits the (thus modified) control frame along the chain of electronic circuits 30a-30d back to the anti-collision safety device 12. The anti-collision safety device 12 may then derive the layout of the robot 10 by analyzing the sequence of entries in the control frame. In another example, only the link modules 16a-16d or only the joint modules 18a-18c may be provided with electronic circuits, if, for example, they can provide data on the joint modules and the link modules 16a-16d, respectively, to which they are connected. In other words, all elements of the kinematic chain should be covered by at least one electronic circuit, but one electronic circuit may cover more than one element.

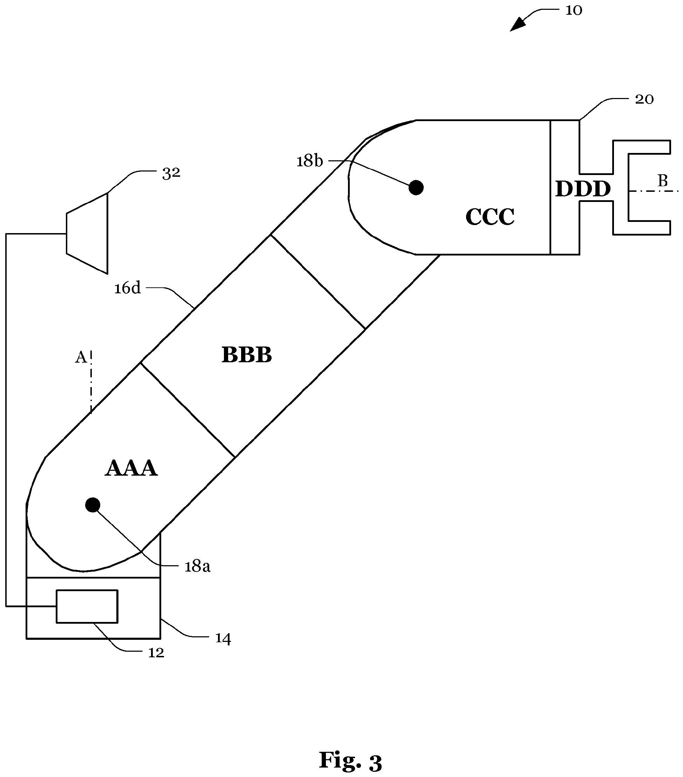

Furthermore, instead of transmitting a control frame along a daisy chain or a logical ring, each electronic circuit 30a-30d may transmit its ID and/or geometric data describing the module shape and/or information on the modules with which it is connected to the anti-collision safety device 12. For example, the electronic circuits 30a-30d may be connected to a bus or transmit the data wirelessly. In another example shown in Fig. 3, the anti-collision safety device 12 may be connected to a camera 32 that captures images of markings AAA, BBB, CCC, DDD which identify the elements of the kinematic chain. Notably, the camera 32 may also be used for recognizing/tracking (static and/or dynamic) obstacles (including humans) 22 in the range of the robot 10.

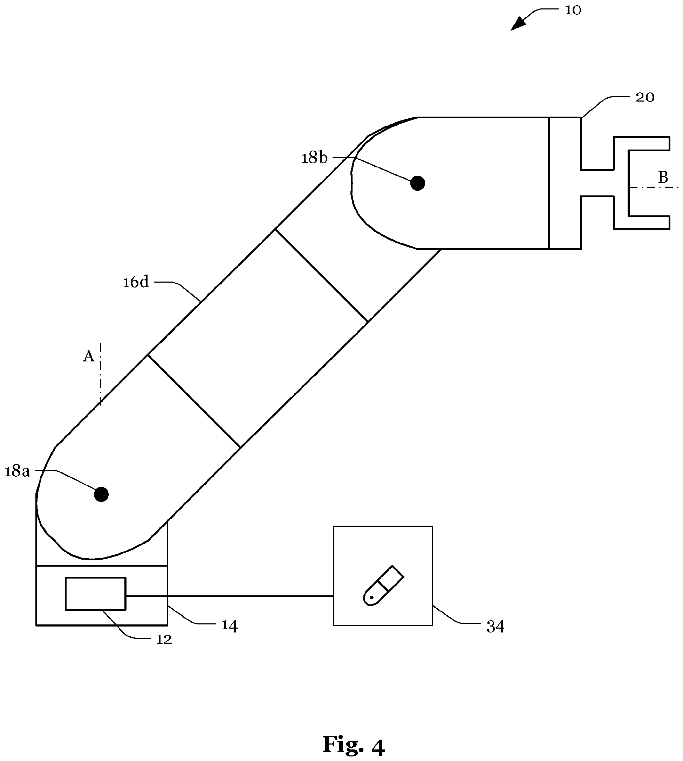

In another example shown in Fig. 4, the anti-collision safety device 12 may be connected to a user terminal/interface 34 which allows mapping the structure of the physical robot 10 to a layout of a virtual robot. For instance, the user terminal/interface 34 may comprise a (touch-) screen which shows graphic representations of the link modules 16a-16d and joint modules 18a-18c that can be attached to each other (e.g., via drag and drop). In yet another example, the user terminal/interface 34 may be used for allowing the user to check (and confirm) that the structure of the physical robot 10 has been correctly recognized. Once the structure of the physical robot 10 has been correctly recognized by the anti-collision safety device 12, an operation of the robot 10 may be started.

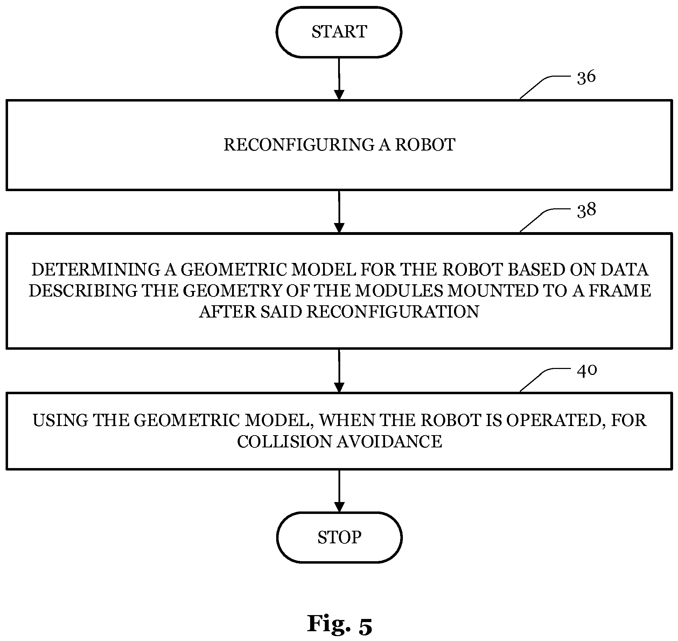

Fig. 5 shows a flow-chart of a procedure for avoiding a collision between the reconfigurable modular robot 10 and obstacles 22 in the environment of the robot 10. The procedure starts at step 36 with reconfiguring the robot 10 by adding and/or removing link modules 16a-16d and/or joint modules 18a-18c to/from the robot 10 in accordance with a layout defining relations between elements of a kinematic chain. The procedure is then continued at step 38 with determining a geometric model 24a, 24b, 22, 28 for the kinematic chain based on data describing the geometry of the link modules 16a-16d and the joint modules 18a-18c mounted to the frame 14. The geometric model 24a, 24b, 22, 28 may then be used at step 40 for collision avoidance, when the robot 10 is operated. Notably, all aspects described in relation to the procedure also relate to the anti-collision safety device 12, and vice versa.

### LIST OF REFERENCE NUMERALS

- 10: robot
- 12: safety device
- 14: frame
- 16a: link module
- 16b: link module
- 16c: link module
- 16d: link module
- 18a: joint module
- 18b: joint module
- 18c: joint module
- 20: tool
- 22: obstacle
- 24a: virtual rigid body (geometric model)
- 24b: virtual rigid body (geometric model)
- 26: geometric model
- 28: geometric model
- 30a: electronic circuit
- 30b: electronic circuit
- 30c: electronic circuit
- 30d: electronic circuit
- 30e: electronic circuit
- 32: camera
- 34: user terminal/interface
- 36: process step
- 38: process step
- 40: process step
- A: axis
- B: axis

## Claims

1. An anti-collision safety device (12) for a reconfigurable modular robot (10), the safety device (12) being configured to:
receive an indication that the robot (10) has been reconfigured;
assign modules (18a-18c) of the robot (10) to elements of a kinematic chain;
determine geometric models (24a, 24b, 22, 28) for the elements of the kinematic chain based on data describing the geometry of the assigned modules (16a-16d, 18a-18c); and
calculate a collision-free movement of elements of the kinematic chain based on:
the determined geometric models (24a, 24b, 22, 28),
a model of the environment, and
a target position and/or orientation of at least one element of the kinematic chain.

2. The anti-collision safety device (12) of claim 1, the safety device (12) being further configured to determine the geometric models (24a, 24b, 22, 28) based on approximating the geometry of the modules (18a-18c) when being provided with said data.

3. The anti-collision safety device (12) of claim 1 or 2, the safety device (12) being further configured to identify a module that has been added to the modular robot and to
access a database that stores data describing the geometry of said module.

4. The anti-collision safety device (12) of any one of claims 1 to 3, the safety device (12) being further configured to identify a module (16a-16d, 18a-18c) that has been added to the modular robot (10) by receiving a control signal via a wired or wireless connection from said module (16a-16d, 18a-18c).

5. The anti-collision safety device (12) of claim 4, the safety device (12) being configured to identify the module (16a-16d, 18a-18c) that has been added to the modular robot (10) by receiving the control signal via a bus interface from said module (16a-16d, 18a-18c).

6. The anti-collision safety device (12) of any one of claims 1 to 3, the safety device (12) being further configured to identify a module (16a-16d, 18a-18c) that has been added to the modular robot (10) by evaluating a signal from a sensor of the safety device (12).

7. The anti-collision safety device (12) of claim 6, the safety device (12) being configured to identify the module (16a-16d, 18a-18c) that has been added to the modular robot (10) by analyzing an image of at least a part of the module (16a-16d, 18a-18c).

8. The anti-collision safety device (12) of any one of claims 1 to 3, the safety device (12) being further configured to identify a module (16a-16d, 18a-18c) that has been added to the modular robot (10) by receiving a manual user input.

9. A method of avoiding a collision between a reconfigurable modular robot (10) and obstacles (22) in the environment of the robot (10), the method comprising:
reconfiguring (36) the robot (10) by adding and/or removing link modules (16a-16d) and/or joint modules (18a-18c) to/from the modular robot (10);
determining (38) a geometric model (24a, 24b, 22, 28) for the robot (10) based on data describing the geometry of the modules (16a-16d, 18a-18c) mounted to a frame (14) after said reconfiguration; and
using (40) the geometric model (24a, 24b, 22, 28), when the robot (10) is operated, for collision avoidance.

10. The method of claim 9, wherein determining (38) the geometric model (24a, 24b, 22, 28) for the robot (10) comprises identifying a layout of the robot (10) and accessing a database for retrieving said data.

11. The method of claim 9 or 10, wherein determining (38) the geometric model (24a, 24b, 22, 28) for the robot (10) comprises approximating a single virtual body (24a, 24b) that covers two or more neighboring modules (16a-16d, 18a-18c) of the robot (10).

12. The method of claim 10 or 11, wherein identifying the layout comprises identifying a position of a link module (16a-16d) or a joint module (18a-18c) within a kinematic chain.

13. The method of claim 12, wherein the link modules (16a-16d) and/or the joint modules (18a-18c) form a daisy chain or logical ring network and identifying the position of the link module (16a-16d) or the joint module (18a-18c) within the kinematic chain comprises identifying a position of the link module (16a-16d) or the joint module (18a, 18b) within the network.

14. The method of claim 12, wherein identifying the position of the link module (16a-16d) or the joint module (18a-18c) within the kinematic chain comprises taking images of the modules (16a-16d, 18a-18c) of the robot (10).

15. The method of any one of claims 9 to 14, wherein using (40) the geometric model (24a, 24b, 22, 28), when the robot (10) is operated, for collision avoidance comprises:
calculating a collision free path for moving one or more modules (16a-16d, 18a-18c) based on the geometric model (24a, 24b, 22, 28), wherein the geometric model (24a, 24b, 22, 28) comprises a chain of approximated virtual rigid bodies (24a, 24b) that can be displaced relative to each other.
